# FASCICULE DE BREVET EUROPEEN

(11) **EP 1 613 236 B1**
(45) Date de publication et mention de la délivrance du brevet: **28.12.2011**
(21) Numéro de dépôt: 04742420.5
(22) Date de dépôt: 01.04.2004
(51) Int. Cl.: A61C 8/00

(54) **PROCEDE DE FIXATION REVERSIBLE D`UN OUTIL SUR UN ELEMENT IMPLANTABLE ET DISPOSITIF POUR LA MISE EN OEUVRE D`UN TEL PROCEDE DE FIXATION**
VERFAHREN ZUR REVERSIBLEN FIXIERUNG EINES WERKZEUGS AN EINEM IMPLANTIERBAREN ELEMENT UND VORRICHTUNG ZUR DURCHFÜHRUNG DIESES FIXIERVERFAHRENS
METHOD FOR REVERSIBLE FIXING OF A TOOL TO AN IMPLANTABLE ELEMENT AND DEVICE FOR CARRYING OUT SUCH A FIXING METHOD

(30) Priorité: 16.04.2003 FR 0304731
(43) Date de publication de la demande: 11.01.2006
(73) Titulaire: Tanimura, Remy, 92200 Neuilly sur Seine (FR)
(72) Inventeur: Tanimura, Remy, 92200 Neuilly sur Seine (FR)
(74) Mandataire: Hecké, Gérard
(86) Numéro de dépôt international: PCT/FR2004/000822
(87) Numéro de publication internationale: WO 2004/093714

(56) Documents cités:
- WO-A-00/54696
- US-A1- 2003 054 319

## Description

### Domaine technique de l'invention

L'invention concerne un procédé de fixation réversible d'un outil sur une extrémité d'un élément implantable, lors de sa mise en place et pour l'élaboration d'une prothèse dentaire ainsi qu'un dispositif pour la mise en oeuvre d'un tel procédé.

### État de la technique

La mise en place d'une prothèse implantaire consiste principalement, à implanter une racine artificielle dans le maxillaire ou la mandibule d'un patient, à réaliser une empreinte de l'emplacement de la racine dentaire de manière à, ensuite, fabriquer la prothèse dentaire finale et à la placer sur la racine artificielle. La racine artificielle aussi appelée implant dentaire est destinée à supporter soit un pilier, formant un moignon artificiel sur lequel est scellée une prothèse dentaire, soit un pilier intermédiaire sur lequel est vissée la prothèse dentaire. La prothèse peut également être vissée directement sur l'implant dentaire. Au cours de ces différentes étapes, le praticien doit utiliser de nombreux outils peu pratiques à fixer aux éléments implantables.

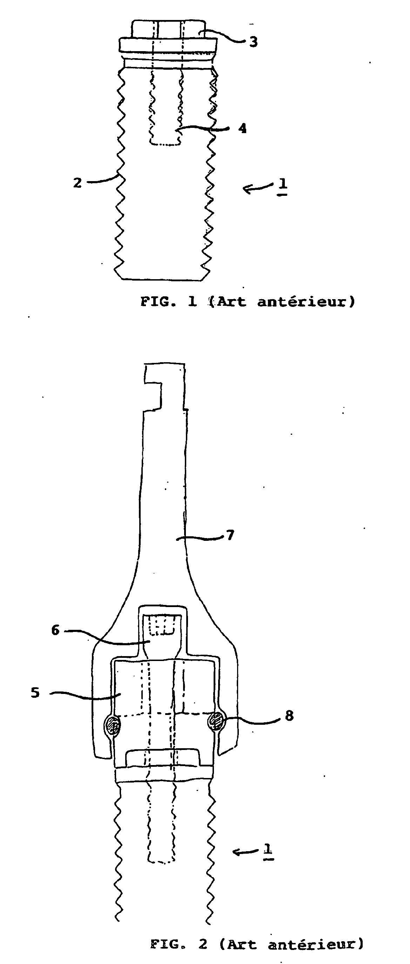

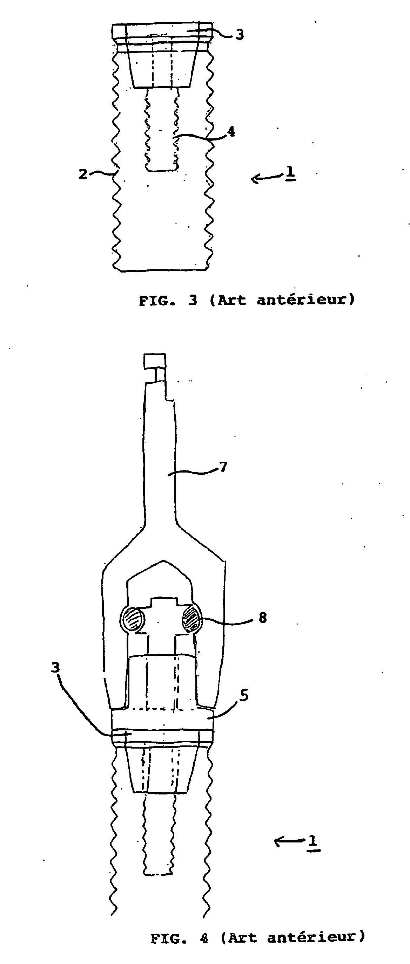

L'implant dentaire a, généralement, la forme d'une vis (figure 1 et 3), de préférence cylindrique et munie d'un filetage externe 2 destiné à visser l'implant dentaire 1 dans les tissus osseux. Une des extrémités de la vis forme une tête 3 munie d'un alésage prolongeant le filetage externe, l'alésage et la tête 3 formant un système anti-rotationnel empêchant la rotation de la pièce ou de l'outil fixé à l'implant et qui peut être externe (figure 1) ou interne (figure 3). Elle comporte un filetage interne 4 se prolongeant, en partie, dans le fût de la vis. Le filetage interne 4 permet de fixer, à l'implant dentaire, un outil ou une pièce prothétique telle qu'un pilier.

Ainsi, pour poser l'implant dentaire 1 dans la mâchoire d'un patient, le praticien utilise un outil supportant l'implant dentaire 1 comme dans le document US2003/054319. Cet outil, aussi appelé porte-implant 5 est fixé à l'implant 1, le plus souvent, par une vis 6 (figure 2 et 4). L'implant 1 peut être vissé dans l'os à l'aide d'un moteur. Il est, alors, nécessaire de fixer le porte-implant 5 sur un mandrin 7, grâce à des joints toriques 8. Ce type de fixation comporte, cependant, des inconvénients. En effet, une fois l'implant dentaire 1 placé dans la mâchoire, il faut encore dévisser le porte-implant 5. De plus, l'ensemble formé par le mandrin 7, le porte-implant 5 et l'implant 1 est encombrant et nécessite une grande ouverture buccale.

Après une période d'ostéo-intégration, le praticien réalise une empreinte, de manière à déterminer précisément l'emplacement et l'orientation de l'implant dentaire (ou du pilier intermédiaire) pour la fabrication de la prothèse dentaire définitive. L'empreinte est réalisée au moyen d'une pièce de transfert qui est fixée, dans un premier temps, à l'implant dentaire (ou au pilier intermédiaire). Ensuite, une réplique de l'implant, dit analogue de laboratoire ou die, est fixée sur la pièce de transfert qui se trouve emprisonnée dans le matériau d'empreinte, la réplique étant destinée à représenter, par la suite, l'implant ou le pilier intermédiaire dans le modèle en plâtre coulé d'après l'empreinte.

Il existe deux techniques principales de prise d'empreinte. La première technique de prise d'empreinte dite technique « Pick-up » consiste à utiliser un porte-empreinte ajouré dans lequel est coulé un matériau d'empreinte et qui permet de dégager et de dévisser la vis fixant la pièce de transfert à l'implant. Une fois l'empreinte retirée, la pièce de transfert est emprisonnée dans le matériau d'empreinte et l'extrémité de la pièce de transfert peut alors être vissée sur l'analogue de laboratoire. L'analogue de laboratoire est, ensuite, moulé dans un matériau d'empreinte, de manière à former un modèle de travail servant de support pour réaliser la prothèse dentaire finale. Cette technique est relativement fiable et précise, mais elle peut s'avérer difficile à mettre en oeuvre selon l'emplacement de l'implant. La seconde technique dite technique « Pop-in» diffère de la première technique par le fait d'utiliser un porte-empreinte fermé et de repositionner la pièce de transfert dans le matériau à empreinte, une fois celui-ci retiré de l'implant dentaire. Cette technique est relativement simple et rapide, mais elle peut se révéler imprécise, notamment à cause du repositionnement de la pièce de transfert dans le porte-empreinte.

La fixation de la pièce de transfert sur l'implant ou sur l'analogue de laboratoire est généralement réalisée par vissage, ce qui rend le positionnement et le retrait de la pièce de transfert difficile à mettre en oeuvre. Dans le document WO-01/64127, il a été proposé d'utiliser une pièce de transfert adaptée à la technique dite de « Pick-up ». La pièce de transfert comporte un corps prolongé par une ou plusieurs branches déformables destinées à s'encliqueter dans la tête d'un implant dentaire. L'encliquetage de la pièce de transfert dans l'implant dentaire n'est cependant pas satisfaisant car des impuretés peuvent s'introduire dans les branches déformables de la pièce de transfert et risquent de bloquer la pièce de transfert dans l'implant dentaire, en empêchant son retrait.

Les outils et les pièces prothétiques, utilisés lors de la mise en place d'une prothèse dentaire, sont généralement adaptés à une fonction unique. Leur nombre et les différents systèmes de connexion rendent la mise en place de la prothèse dentaire longue et peuvent entraîner des erreurs de manipulation. Ils peuvent, notamment, poser des problèmes de sécurité, le patient risquant d'ingérer des petites pièces et/ou des outils lors des interventions.

Il a été proposé, dans le document WO-0207638, une gamme d'outillages utilisée en implantologie dentaire pour laquelle la partie travaillante d'un outil est fixée, de manière réversible, au reste de l'outil de manière à pouvoir être changée, la fixation pouvant être réalisée par encliquetage. Cette technique permet seulement, au praticien, de se servir de la base commune de l'outil pour plusieurs opérations identiques. Elle ne facilite, donc, pas les différentes étapes de mise en place d'une prothèse dentaire. Le document US6332777 décrit également la fixation directe et réversible d'un outil tel qu'un élément d'impression aussi appelé capsule d'impression ou de moulage sur un élément implantable, qui peut être par exemple un implant. L'implant comporte ainsi une partie implantable destinée à être implantée dans un os ou dans un modèle, une tête destinée à faire saillie à l'extérieur de l'os ou du modèle et un épaulement disposé entre la tête et la partie implantable. La fixation de l'élément d'impression sur l'implant est alors réalisée grâce à des moyens de fixation disposés à une des extrémités de l'élément d'impression et destinés à être emboîtés dans l'épaulement du support.

Par ailleurs, il existe des pièces de connexion intermédiaires fixant de façon permanente deux éléments implantables destinés à rester dans la mâchoire d'un patient. Ainsi, le document US4957437 décrit une dent artificielle comprenant un élément de contact, un élément de base métallique creux disposé à l'intérieur de l'élément de contact, un pilier métallique disposé dans le creux de l'élément de base et des éléments tampon élastiques disposés dans un espace formé entre l'élément de base et le pilier. Le pilier et la partie supérieure de l'élément de base comportent respectivement des renfoncements destinés à recevoir un des éléments tampon. L'élément tampon permet d'obtenir un effet d'amortissement satisfaisant entre le pilier et l'élément de base tout en assurant la connexion permanente entre le pilier et l'élément de base, c'est-à-dire entre deux éléments destinés à rester dans la mâchoire d'un patient. Un tel élément n'est cependant pas adapté à la fixation réversible d'outils sur des éléments implantables.

### Objet de l'invention

L'invention a pour but de proposer un procédé de fixation entre des outils et des éléments implantables, fiable, pratique, rapide à mettre en oeuvre et s'adaptant à différents types d'outils et éléments implantables utilisés lors des différentes étapes de la mise en place de l'implant dentaire et pour l'élaboration d'une prothèse dentaire.

Selon l'invention, ce but est atteint par la revendication 1 annexée.

L'invention a également pour objectif de proposer un dispositif pour la mise en oeuvre d'un tel procédé, diminuant les risques d'ingestion d'outils ou de pièces utilisées lors de la mise en place de l'implant dentaire et pour l'élaboration d'une prothèse dentaire et facilitant les étapes d'une telle mise en place.

Selon l'invention, ce but est atteint par les revendications 2 à 16 annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue en coupe d'un implant dentaire à tête externe selon l'art antérieur.
La figure 2 est une vue en coupe d'un outil de pose selon l'art antérieur, fixé à l'implant dentaire selon la figure 1.
La figure 3 est une vue en coupe d'un implant dentaire à tête interne selon l'art antérieur.
La figure 4 est une vue en coupe d'un outil de pose selon l'art antérieur, fixé à l'implant dentaire selon la figure 3.
Les figures 5 et 6 sont respectivement une vue en perspective et une vue en coupe d'un implant dentaire à tête externe selon l'invention.
La figure 7 représente schématiquement une pièce de connexion intermédiaire selon l'invention.
La figure 8 et 9 représentent respectivement un outil de pose et une pièce de transfert respectivement fixé sur l'implant dentaire selon la figure 5.
Les figures 10 et 11 sont respectivement une vue en perspective et une vue en coupe d'un implant dentaire à tête interne selon l'invention.
La figure 12 représente schématiquement une pièce de connexion intermédiaire selon l'invention.
Les figures 13 à 20 représentent schématiquement des outils fixés sur un élément implantable selon l'invention.
Les figures 21 à 25 représentent différents modes de réalisation d'une pièce de connexion intermédiaire selon l'invention.
Les figures 26 et 27 représentent respectivement un mode particulier de réalisation d'une pièce de connexion intermédiaire selon l'invention et un outil muni d'une telle pièce de connexion.

### Description de modes particuliers de réalisation.

Un procédé de fixation d'un outil sur une extrémité d'un élément implantable lors de la mise en place d'une prothèse dentaire, consiste à fixer, de manière réversible, différents types d'outils sur différents types d'éléments implantables. Pour cela, une pièce de connexion intermédiaire creuse est destinée à être fixée, de manière réversible, par vissage ou par encliquetage, sur une partie complémentaire externe de l'outil et par encliquetage sur une partie complémentaire externe de l'élément implantable. La pièce de connexion intermédiaire est stérile et généralement à usage unique, c'est-à-dire propre à un patient. En effet, une même pièce de connexion intermédiaire peut être utilisée plusieurs fois pour un même patient. La pièce de connexion est destinée à se déformée de manière élastique lors de son encliquetage. Ainsi, elle peut être réalisée en matière plastique telle qu'un polymère fluoré de type Téflon® ou en Nylon®. La pièce de connexion peut également être métallique, par exemple en titane ou en un alliage de titane. Dans ce cas, la pièce de connexion comporte des fentes permettant à la pièce de connexion métallique de se déformer. Elle peut également comporter une partie en matière plastique et une partie métallique.

Par élément implantable, on entend un élément servant de racine artificielle à la prothèse dentaire et destiné à être implanté dans la mâchoire d'un patient, tel qu'un implant dentaire ou un pilier intermédiaire destiné à être fixé sur un implant dentaire. Un tel élément implantable est, de préférence, à base de titane, de manière à favoriser une bonne ostéo-intégration entre les tissus osseux de la mâchoire et l'implant. Ainsi, il peut être en titane pur ou en alliage de titane, d'aluminium et de vanadium. Par élément implantable, on entend également une réplique d'implant dentaire, aussi appelée analogue de laboratoire ou « die » et destinée à former le modèle de laboratoire servant à réaliser la prothèse dentaire.

Par outil, on entend un instrument utilisé lors de la mise en place d'un élément implantable, tel qu'un porte-implant, un porte-pilier, un mandrin mais également la pièce de transfert utilisée pour réaliser le modèle de laboratoire.

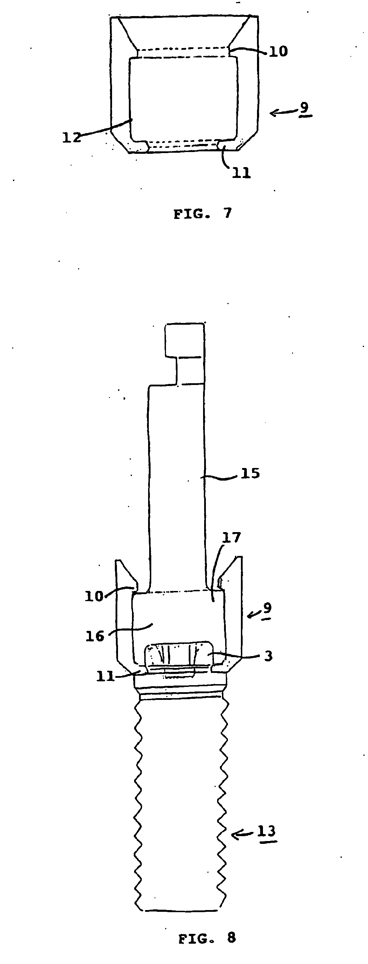

Selon un premier mode de réalisation représenté à la figure 7, une pièce de connexion intermédiaire 9, sensiblement cylindrique et creuse, comporte une paroi interne dans laquelle sont formés des premier et second rebords 10 et 11. Les premier et second rebords 10 et 11 font saillie vers l'intérieur de la pièce de connexion 9 et ils sont, chacun, disposés à une extrémité de la pièce de connexion intermédiaire 9. Les premier et second rebords 10 et 11 délimitent une rainure 12 destinée à coopérer avec une partie complémentaire externe d'un outil. Ainsi, la pièce de connexion intermédiaire 9 est destinée à être placée sur un outil pour fixer, de manière réversible, l'outil sur un élément implantable.

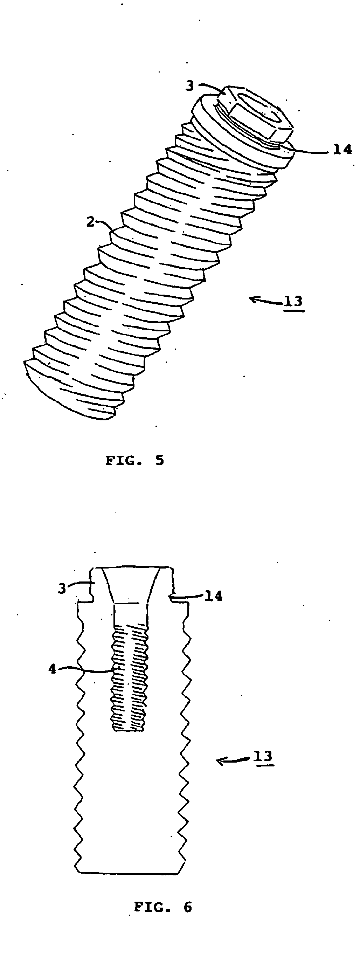

L'élément implantable peut être, par exemple, un implant dentaire 13 avec un système anti-rotationnel externe tel que celui représenté aux figures 5 et 6. L'implant dentaire 13 a une forme sensiblement équivalente à celle des implants dentaires 1 à système anti-rotationnel externe, selon l'art antérieur (figure 1), la tête 3 comportant cependant, à sa périphérie externe, une rainure externe 14 servant de partie complémentaire externe pour l'encliquetage de la pièce de connexion 9 sur l'implant dentaire 13. Sur les figures 5 et 6, l'implant dentaire 13 a un système anti-rotationnel hexagonal.

Ainsi, pour placer un tel implant dentaire 13 dans la mâchoire d'un patient, le praticien fixe, par déformation puis par encliquetage, la pièce de connexion 9 sur la partie distale 16 d'un outil de pose 15 faisant office de mandrin (figure 8). L'implant dentaire peut être vissé dans la mâchoire d'un patient, par l'intermédiaire de l'outil de pose, soit à l'aide d'un moteur soit manuellement. La partie distale 16 de l'outil de pose 15 a une forme complémentaire à la paroi interne de la pièce de connexion 9, de manière à parfaitement encliqueter la pièce de connexion autour de l'outil de pose 15. Ainsi elle comporte une nervure périphérique 17 faisant saillie et destinée à coopérer dans la rainure 12 de la pièce de connexion 9. La complémentarité des formes de la partie distale 16 et de la paroi interne de la pièce de connexion 9, et la fixation par encliquetage empêchent les mouvements verticaux de l'outil de pose à l'intérieur de la pièce de connexion 9.

L'extrémité de la partie distale 16 de l'outil de pose 15 comporte, également, une ouverture ayant une forme complémentaire à celle de la tête 3 de l'implant dentaire 13. Ainsi, une fois l'outil de pose 15 muni de la pièce de connexion 9, le praticien place l'ouverture de l'outil de pose 15 sur la tête 3 de l'implant dentaire 13 jusqu'à encliquetage du second rebord 11 de la pièce de connexion intermédiaire dans la rainure externe 14 de l'implant dentaire 13. La fixation réversible de l'outil de pose 15 sur l'implant dentaire 13 est, ainsi, réalisée grâce à l'encliquetage de la pièce de connexion 9 sur l'implant dentaire.

L'ensemble formé par la pièce de connexion intermédiaire 9 et l'outil de pose 15 remplace avantageusement le porte-implant et le mandrin selon l'art antérieur (figure 2). En effet, une légère pression permet de fixer, à l'aide de la pièce de connexion intermédiaire, l'outil de pose 15 sur la tête 3 de l'implant dentaire 13, tandis que pour retirer l'outil de pose il suffit de tirer légèrement pour libérer l'implant dentaire 13. La pièce de connexion intermédiaire 9 évite, ainsi, des opérations de vissage et de dévissage, qui nécessitent un outil particulier et une ouverture buccale suffisamment grande pour dégager la vis qui fixe le porte-implant selon l'art antérieur à l'implant dentaire.

Une fois encliquetés, l'outil et la pièce de connexion et la pièce de connexion et l'implant dentaire sont en contact intime, sans jeu. Ainsi, aucun encliquetage partiel ne doit être observé, soit l'assemblage est sans jeu, soit la pièce de connexion et l'implant dentaire sont dé-encliquetés.

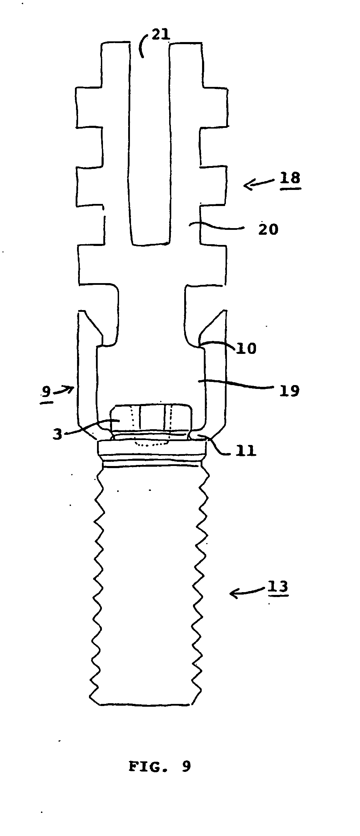

Comme représenté à la figure 9, la pièce de connexion intermédiaire 9 permet, également, de réaliser une fixation réversible entre l'implant dentaire 13 et une pièce de transfert 18. La pièce de transfert peut être de tout type connu. Elle comporte, cependant, une partie distale destinée à être fixée à l'implant dentaire 13 puis à un analogue de laboratoire (non représenté). La partie distale de la pièce de transfert 18 a la même forme que celle de l'outil de pose 15. Ainsi, elle comporte une ouverture ayant une forme complémentaire à celle de la tête 3 de l'implant dentaire et elle comporte une nervure périphérique 19 faisant saillie et destinée à coopérer avec la rainure 12 de la pièce de connexion 9. Elle comporte également une partie proximale 20 munie de deux fentes 21 se croisant perpendiculairement.

Une telle fixation permet notamment de réaliser une prise d'empreinte avec un porte-empreinte fermé tels que ceux utilisés pour la technique dite « Pop-in », tout en conservant la fiabilité et la précision de la technique dite « Pick-up ». Ainsi, la connexion entre la pièce de connexion et l'implant dentaire ou l'analogue de laboratoire est facile à réaliser et elle évite de nombreuses opérations de vissage et de dévissage. De plus, le fait de réaliser un encliquetage externe évite un contact entre la partie distale de l'outil et les tissus de la mâchoire du patient. Ainsi, l'outil ne risque pas d'être contaminé par des tissus peri-implantaires.

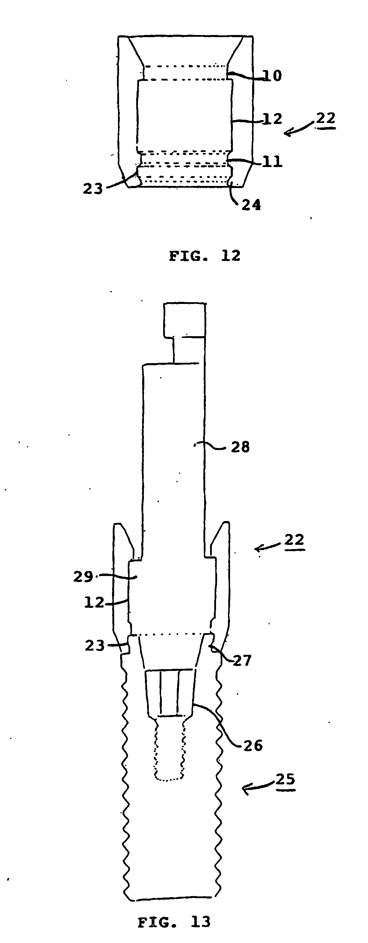

Dans un second mode de réalisation représenté à la figure 12, la pièce de connexion intermédiaire 22 comporte une paroi interne dans laquelle sont formées des première et seconde rainures adjacentes, la première rainure 12 étant beaucoup plus large que la seconde. La première rainure 12 est délimitée par les premier et second rebords 10 et 11 tandis que la seconde rainure 23 est délimitée par le second rebord 11 et par un troisième rebord 24 prolongeant l'extrémité de la pièce de connexion destinée à être fixée à l'extrémité de l'élément implantable.

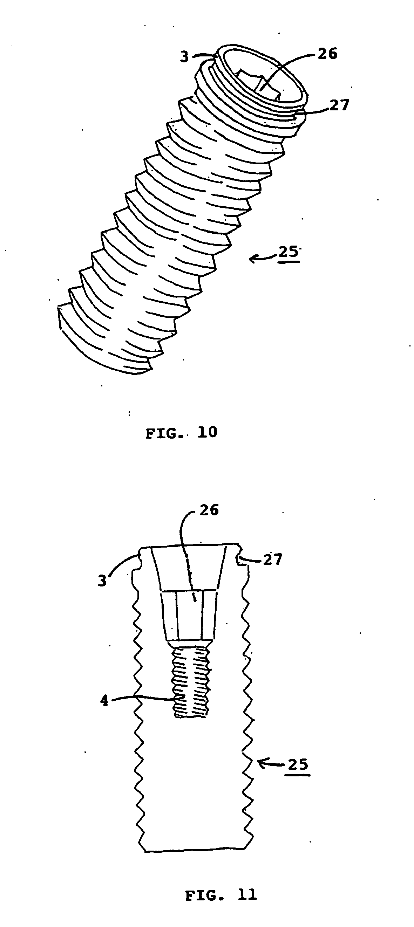

L'élément implantable peut être, par exemple, un implant dentaire avec un système anti-rotationnel interne et destiné à être placé dans la mâchoire d'un patient, tel que celui représenté aux figures 10 et 11. L'implant dentaire 25 a une forme sensiblement équivalente à celle des implants dentaires à système anti-rotationnel interne, selon l'art antérieur (figure 3). Le système anti-rotationnel interne est en forme d'hexagone sur les figures 10 et 11. Ainsi, l'implant dentaire 25 comporte une tête 3, un alésage 26 débouchant sur une extrémité de l'implant dentaire. L'alésage 26 forme le système anti-rotationnel interne de l'implant dentaire 25 et il est prolongé par un filetage interne 4. L'extrémité de l'implant dentaire est munie, à sa périphérie externe, d'au moins une nervure externe 27, servant de partie complémentaire externe pour l'encliquetage de la pièce de connexion 22 sur l'implant dentaire 25.

A la figure 13, la pièce de connexion 22 est placée, par déformation élastique puis par encliquetage, autour d'un outil de pose servant à la fois de porte-implant et de mandrin. Ainsi, de manière analogue au premier mode de réalisation, l'outil de pose 28 comporte une partie complémentaire externe 29 destinée à coopérer avec la première rainure 12 de la pièce de connexion 22 lors de l'encliquetage de celle-ci sur l'outil de pose 28. Une fois la pièce de connexion placée sur l'outil de pose 28, l'extrémité de l'outil de pose 28 est introduite dans l'alésage 26 de l'implant dentaire 25, jusqu'à encliquetage de la nervure externe 27 de l'implant dentaire 25 dans la seconde rainure 23 de la pièce de connexion. L'extrémité de l'outil de pose 28 a une forme complémentaire à l'alésage 26 de l'implant dentaire 25.

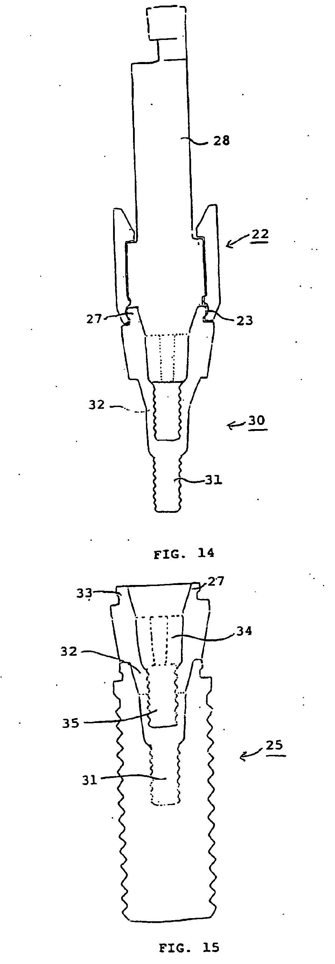

La pièce de connexion intermédiaire 22 peut également fixer, de manière réversible, un outil de pose à un pilier intermédiaire, notamment pour placer celui-ci dans un implant dentaire 25 à système anti-rotationnel interne tel que celui représenté aux figures 10 et 11. Ainsi, à la figure 14, l'outil de pose 28 utilisé pour placer l'implant dentaire 25 dans la mâchoire d'un patient est muni de la pièce de connexion 22 puis il est fixé, de manière réversible à un pilier intermédiaire 30. Le pilier intermédiaire 30 est destiné à être fixé, par vissage, dans l'implant dentaire 25 (figure 15). Ainsi, il comporte une extrémité filetée 31, un corps 32, une tête 33 et un alésage 34 formant un système anti-rotationnel, l'alésage 34 étant prolongé par un filetage interne 35. Le corps 32 a une forme adaptée pour pouvoir être introduit dans l'alésage 26 de l'implant dentaire sans exploiter le système anti-rotationnel de l'alésage 26 de l'implant dentaire. La tête 33 comporte une nervure externe 27 analogue à celle de l'implant dentaire 25. Ainsi, l'outil de pose 28 est fixé au pilier intermédiaire, au moyen de la pièce de connexion 22. L'ensemble est alors placé sur l'extrémité de l'implant dentaire 25 (figure 15), de manière à placer le pilier intermédiaire dans l'implant dentaire 25. L'outil de pose 28 muni de la pièce de connexion 22 est ensuite retiré du pilier intermédiaire 30 après que celui-ci ait été vissé dans l'implant dentaire 25. Ainsi, la manipulation du pilier intermédiaire est réalisée avec le même outil de pose 28 que pour la mise en place de l'implant dentaire. Ceci permet de réduire le risque de perdre le pilier par ingestion et évite toute contamination lors de la manipulation. Le procédé de fixation permet également de réduire le temps opératoire et il est économique.

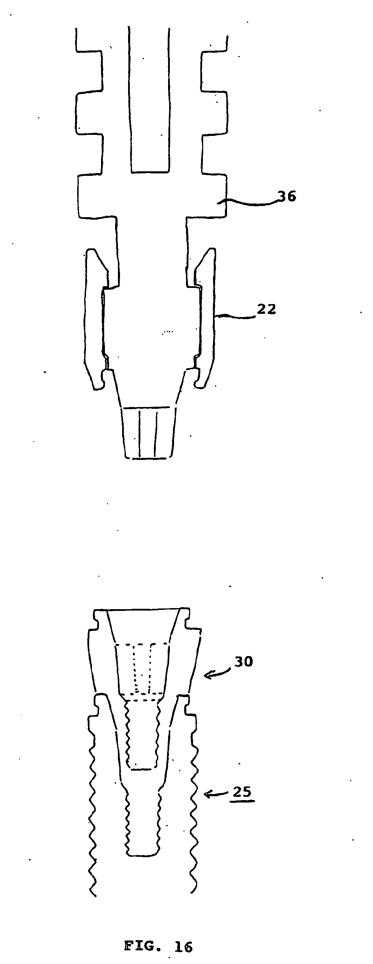

La pièce de connexion 22 permet également de fixer, de manière réversible, une pièce de transfert 36 sur un élément implantable, durant les différentes étapes de réalisation d'une prise d'empreinte. Ainsi, dans un premier temps, la pièce de transfert 36 est, par exemple, fixée sur un pilier intermédiaire 30 grâce à la pièce de connexion 22, le pilier intermédiaire 30 étant lui-même disposé sur un implant dentaire 25 (figure 16). La pièce de connexion 22 est placée, par déformation puis par encliquetage, sur la partie complémentaire externe d'une pièce de transfert 36. Cette partie complémentaire externe a la même forme que la partie complémentaire de l'outil de pose 28, de manière à pouvoir être encliquetée dans les première et seconde rainures 12 et 23 de la pièce de connexion 22. Pour être introduite dans l'alésage 34 du pilier intermédiaire 30, la pièce de transfert 36 comporte, également, une extrémité ayant une forme complémentaire à la forme de l'alésage 34 du pilier intermédiaire 30. La fixation réversible de la pièce de transfert sur le pilier intermédiaire est réalisée par encliquetage de la pièce de connexion 22 sur l'extrémité du pilier intermédiaire 30. La pièce de transfert 36 a également une extrémité identique à l'alésage 26 de l'implant dentaire, de sorte que la pièce de connexion 22 puisse être directement encliquetée sur l'implant dentaire. Ceci évite, notamment, de réaliser des opérations de vissage et de dévissage lors de la réalisation de prise d'empreinte. Il en résulte un gain de temps et une plus grande facilité d'exécution.

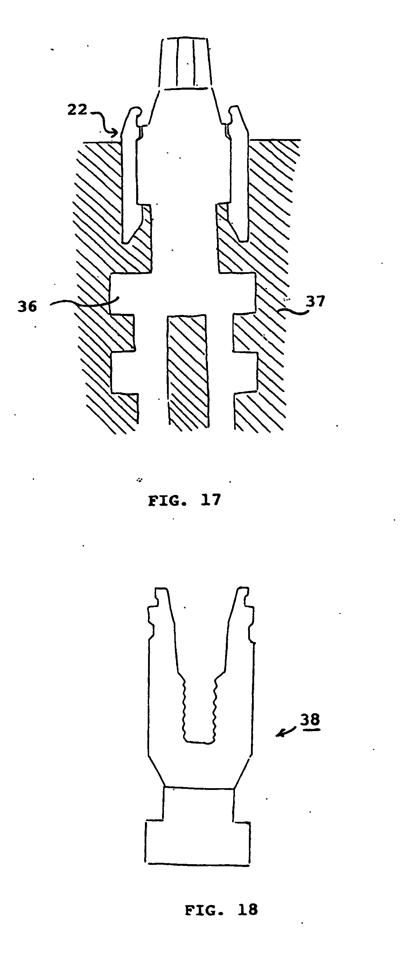

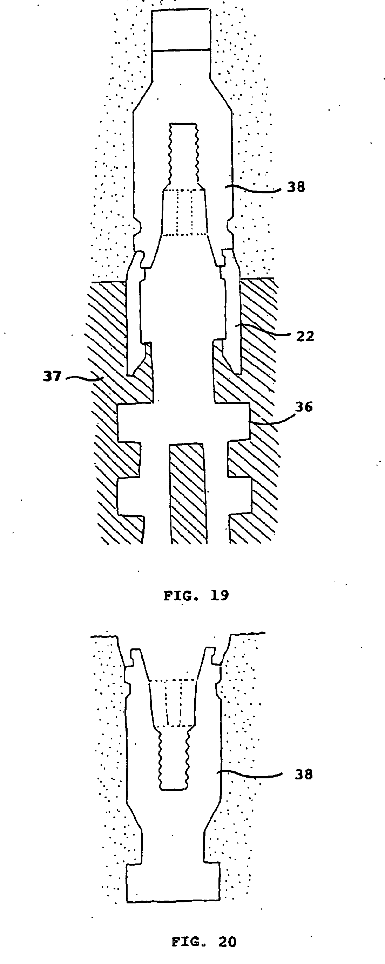

Une fois la pièce de transfert fixée au pilier intermédiaire 30, le praticien réalise une empreinte de la pièce de transfert, à l'aide d'un porte-empreinte fermé et d'un matériau d'empreinte, puis il retire le porte-empreinte par dé-encliquetage de la pièce de connexion et du pilier intermédiaire. La pièce de transfert 36 munie de la pièce de connexion 22 reste emprisonnée dans le matériau d'empreinte 37 (figure 17). Dans un second temps, la pièce de transfert 36 est fixée à un analogue de laboratoire 38 (figures 18 et 19), au moyen de la pièce de connexion 22, l'analogue de laboratoire 38 étant une reproduction de l'implant dentaire et du pilier intermédiaire 30.

Ainsi, le mode de connexion par encliquetage, au moyen d'une pièce de connexion intermédiaire, permet, notamment, d'augmenter la sécurité durant les interventions chirurgicales et prothétiques, tout en diminuant les risques d'ingestion des instruments ou des composants prothétiques. Il permet également de faciliter les différentes étapes de mise en place d'une prothèse dentaire, en supprimant les phases de vissage et de dévissage des outils sur les éléments implantables. Ce mode de connexion est également économique car le nombre de pièces nécessaire lors de la mise en place d'une prothèse dentaire est considérablement réduit. De plus, la pièce de connexion est la seule pièce parmi les outils à être en contact avec les tissus péri-implantaires. La pièce de connexion est à usage unique, c'est-à-dire qu'elle est utilisée pour un seul patient, mais elle peut servir à connecter plusieurs éléments dans une même séance, lors de la mise en place des implants et pour l'élaboration de la prothèse dentaire.

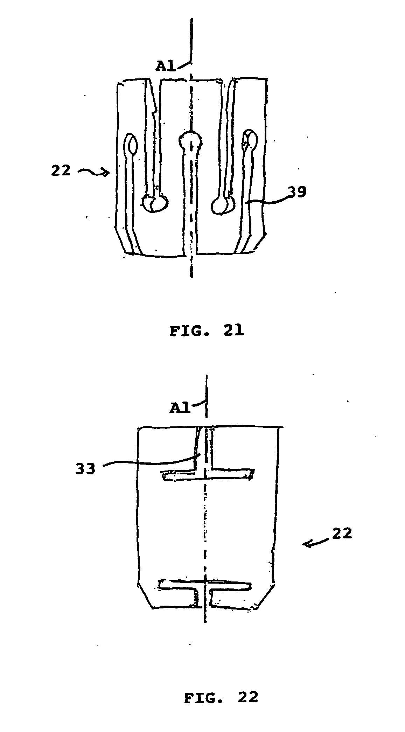

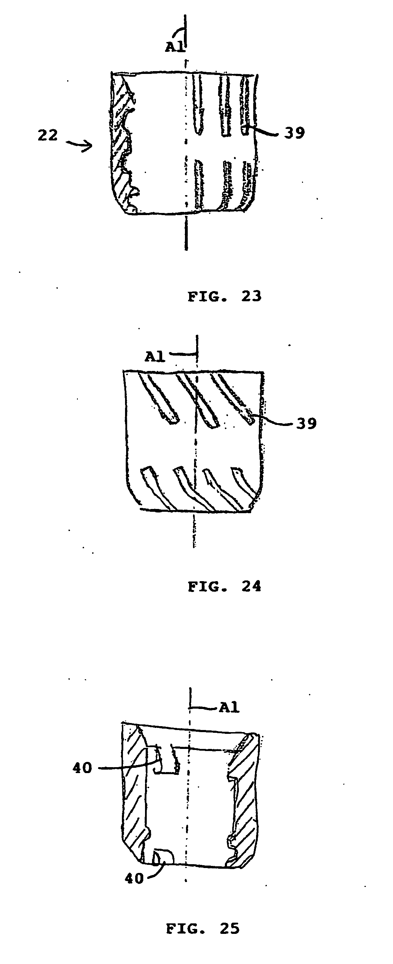

Pour pouvoir être encliquetée sur un outil, la pièce de connexion intermédiaire doit comporter des propriétés de déformation élastique. Ainsi, elle peut être en matière plastique, métallique ou comporter une partie en matière plastique et une partie métallique. Pour une pièce de connexion métallique, celle-ci comporte des fentes destinées à la rendre déformable. Ainsi, la pièce de connexion peut comporter, à chacune de ses deux extrémités, des fentes 39 disposées régulièrement et se prolongeant vers le centre de la pièce (figures 21 à 25). A titre d'exemple, les fentes peuvent être longitudinales et se prolonger vers le centre de la pièce (figure 21) ou bien elles peuvent être en forme de « T » (figure 22). Aux figures 23 et 24, les fentes 39 sont respectivement parallèles et obliques par rapport à l'axe A1 de la pièce de connexion. La paroi interne de la pièce de connexion peut également comporter au moins deux ergots 40 respectivement disposés à une extrémité de la pièce de connexion, de manière à renforcer le maintien de l'outil sur lequel est posée la pièce de connexion (figure 25). Une pièce de connexion intermédiaire, en matière plastique, peut également comporter des fentes destinées à améliorer la capacité de déformation élastique de la pièce de connexion.

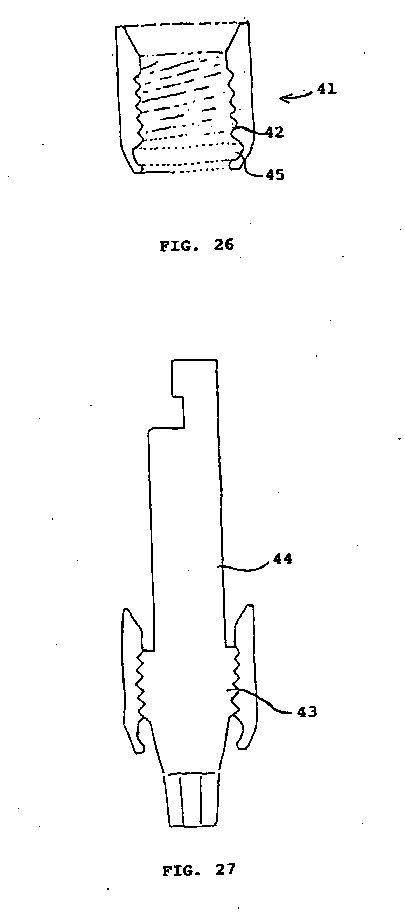

La fixation réversible de la pièce de connexion intermédiaire sur l'outil peut également être réalisée par vissage. Ainsi, comme représentée aux figures 26 et 27, la paroi interne d'une pièce de connexion intermédiaire 41 creuse comporte un filetage interne 42 dans lequel est vissée la partie distale filetée 43 d'un outil 44, ladite partie distale filetée formant la partie complémentaire externe de l'outil. La pièce de connexion intermédiaire 41 comporte également une rainure 45 destinée à coopérer, par encliquetage, avec une nervure externe d'un élément implantable.

L'invention n'est pas limitée aux modes de réalisation décrits ci-dessus mais elle est limitée seulement aux revendications. En effet, la pièce de transfert peut être soit directement fixée à l'implant dentaire, soit être fixée sur un pilier intermédiaire. De plus, l'ensemble des éléments implantables ainsi que les outils peuvent être de tout type connu. Selon l'invention, ils doivent, cependant, comporter une partie complémentaire externe destinée à être fixée de manière réversible à la pièce de connexion. A titre d'exemple, il est possible d'utiliser une pièce de transfert selon l'art antérieur, à condition qu'elle comporte une partie complémentaire externe destinée à être fixée, de manière réversible, avec la pièce de connexion intermédiaire, par exemple par encliquetage ou par vissage. Enfin, la pièce de connexion n'est pas limitée à une pièce de connexion cylindrique, elle peut, par exemple, être polygonale, conique ou cylindro-conique. Dans le cas d'une pièce de connexion conique ou cylindro-conique, la fixation réversible s'effectue uniquement sur la partie distale de l'outil. La pièce de connexion peut également comporter une ouverture traversant sa surface parallèlement à l'axe A1 de la pièce de connexion, de manière à insérer latéralement la pièce de connexion sur la partie distale de l'outil.

## Revendications

1. Procédé de fixation réversible d'un outil sur une extrémité d'un élément implantable pour prothèse dentaire, à l'aide d'une pièce de connexion intermédiaire (9, 22) creuse, ladite pièce de connexion étant fixée réversiblement autour d'une partie complémentaire externe de l'outil et l'extrémité de l'élément implantable étant munie d'un système anti-rotationnel,
**caractérisé en ce que** :
- ladite partie de l'outil comprend une extrémité ayant une forme complémentaire à la forme du système anti-rotationnel,
- et la fixation réversible de la pièce de connexion intermédiaire autour de la partie complémentaire externe de l'outil est suivie d'une étape de positionnement de l'extrémité de l'outil sur ou dans le système anti-rotationnel jusqu'à encliquetage de la pièce de connexion intermédiaire (9, 22) sur une partie complémentaire externe de l'élément implantable (13, 25, 30, 38), au moyen d'une nervure externe ou d'une rainure externe sur la tête de l'élément implantable et d'une forme complémentaire sur la pièce de connexion intermédiaire, empêchant tout mouvement longitudinal de l'outil dans la pièce de connexion et assurant la mise en contact de l'extrémité de la partie distale (16) de l'outil avec le système anti-rotationnel, avec lequel elle coopère.

2. Dispositif de fixation comportant :
- un élément implantable (13) pour prothèse dentaire comprenant une extrémité munie d'un système anti-rotationnel,
- un outil (15)
- et une pièce de connexion intermédiaire (9, 22), creuse comportant des moyens de fixation pour fixer, de manière réversible, la pièce de connexion autour d'une partie complémentaire externe de l'outil,
**caractérisé en ce que** :
- la pièce de connexion intermédiaire comporte des moyens d'encliquetage destinés à venir s'encliqueter par complémentarité sur ou dans le système anti-rotationnel au moyen d'une nervure externe ou rainure externe sur la tête de l'élément implantable (13, 25, 30, 38),
- et la partie complémentaire externe de l'outil comporte une extrémité de la partie distale (16) de forme complémentaire à celle du système anti-rotationnel, destinée à être mise en contact avec ledit système anti-rotationnel de l'élément implantable avec lequel elle coopère lors de l'encliquetage, empêchant tout mouvement longitudinal de l'outil dans la pièce de connexion et permettant la fixation réversible de différents types d'outils dans différents types d'éléments implantables.

3. Dispositif selon la revendication 2, **caractérisé en ce que** les moyens de fixation comportent au moins une rainure (12) formée dans la paroi interne de la pièce de connexion (9, 22) et destinée à coopérer, par encliquetage, avec une nervure périphérique (17) en saillie sur l'outil (15, 18, 28, 36).

4. Dispositif selon la revendication 3, **caractérisé en ce que** la rainure (12) est délimitée par au moins un rebord (11) disposé à une extrémité de la pièce de connexion (9), ledit rebord (11) étant destiné à coopérer, par encliquetage, avec la rainure externe (14) formée à l'extrémité de l'élément implantable (13).

5. Dispositif selon la revendication 3, **caractérisé en ce que** les moyens d'encliquetage comportent une seconde rainure (23) formée dans la paroi interne de la pièce de connexion (22) et destinée à coopérer avec la nervure externe (27) formée à l'extrémité de l'élément implantable (25, 30, 38).

6. Dispositif selon la revendication 2, **caractérisé en ce que** les moyens de fixation comportent des moyens de vissage.

7. Dispositif selon l'une quelconque des revendications 2 à 6, **caractérisé en ce que** la pièce de connexion intermédiaire (9, 22) est en matière plastique.

8. Dispositif selon l'une quelconque des revendications 2 à 6, **caractérisé en ce que** la pièce de connexion intermédiaire (9, 22) est métallique et elle comporte des fentes (39) destinées à la rendre déformable.

9. Dispositif selon l'une quelconque des revendications 2 à 6, **caractérisé en ce que** la pièce de connexion intermédiaire (9, 22) comporte une partie métallique et une partie en matière plastique.

10. Dispositif selon l'une quelconque des revendications 2 à 9, **caractérisé en ce que** la pièce de connexion comporte une ouverture traversant sa surface parallèlement à l'axe (A1).

11. Dispositif selon l'une quelconque des revendications 2 à 10, **caractérisé en ce que** la pièce de connexion (9, 22) comporte des ergots (40) faisant saillie vers l'intérieur de la pièce.

12. Dispositif selon l'une quelconque des revendications 2 à 11, **caractérisé en ce que** l'élément implantable est un implant dentaire.

13. Dispositif selon l'une quelconque des revendications 2 à 11, **caractérisé en ce que** l'élément implantable est un pilier intermédiaire.

14. Dispositif selon l'une des revendications 12 et 13, **caractérisé en ce que** l'outil est un outil de pose (15, 28) de l'élément implantable.

15. Dispositif selon l'une quelconque des revendications 2 à 11, **caractérisé en ce que** l'élément implantable est un analogue de laboratoire.

16. Dispositif l'une des revendications 12, 13 et 15, **caractérisé en ce que** l'outil est une pièce de transfert utilisée pour une prise d'empreinte.

## Claims

1. Method for reversible fixing of a tool to an end of an implantable element for dental prosthesis, by means of a hollow intermediate connecting part (9, 22), said hollow intermediate connecting part being reversible fixed around an external complementary part of the tool and the end of the implantable element being provided with an anti-rotational system,
**characterized in that**:
- the said part of the tool comprises an end having a complementary shape to the shape of the anti-rotational system,
- and the reversible fixation of the hollow intermediate connecting part around the external complementary part of the tool is followed by a step of positioning of the end of the tool on or in the anti-rotational system until clipping the intermediate connecting part (9, 22) onto an external complementary part of the implantable element (13, 25 , 30, 38), by means of an external rib or of an external groove on the head of the implantable element and of a complementary shape on the intermediate connecting part, preventing any longitudinal movement of the tool in the intermediate connecting part and assuring the contact of the end of the distal part (16) of the tool with the anti-rotational system with which it cooperates.

2. Fixing device comprising:
- an implantable element (13) for dental prosthesis, comprising an end provided with an anti-rotational system,
- a tool (15),
- and a hollow intermediate connecting part (9, 22), comprising fixing means for fixing the connecting part in reversible manner onto an external complementary part of the tool,
**characterized in that**:
- the intermediate connecting part comprises clipping means designed to be clipped by complementarity on or in the anti-rotational system by means of an external rib or of an external groove on the head of the implantable element,
- and the external complementary part of the tool comprises an end of the distal part having a complementary shape to the shape of the anti-rotational system, designed to be brought into contact with the anti-rotational system of the implantable element with which it cooperates during clipping, preventing any longitudinal movement of the tool in the intermediate connecting part and allowing the reversible fixation of different types of tools in different types of implantable elements.

3. Device according to claim 2, **characterized in that** the fixing means comprise at least one groove (12) formed in the internal wall of the connecting part (9, 22) and designed to cooperate by clipping with a salient peripheral rib (17) on the tool (15, 18, 28, 36).

4. Device according to claim 3, **characterized in that** the groove (12) is delimited by at least one rim (11) arranged at one end of the connecting part (9), said rim (11) being designed to cooperate by clipping with the external groove (14) formed at the end of the implantable element (13).

5. Device according to claim 3, **characterized in that** the clipping means comprise a second groove formed in the internal wall of the connecting part and designed to cooperate with an external rib formed at the end of the implantable element (25, 30,38).

6. Device according to claim 2, **characterized in that** the fixing means comprise screwing means.

7. Device according to anyone of the claims 2 to 6, **characterized in that** the intermediate connecting part (9, 22) is made of plastic.

8. Device according to any one of the claims 2 to 6, **characterized in that** the intermediate connecting part (9, 22) is made of metal and that it comprises slots (39) designed to make it deformable.

9. Device according to any one of the claims 2 to 6, **characterized in that** the intermediate connecting part (9, 22) comprises a metal part and a plastic part.

10. Device according to any one of the claims 2 to 9, **characterized in that** the connecting part comprises an opening passing through the surface thereof in a direction parallel to the axis (A1).

11. Device according to any one of the claims 2 to 10, **characterized in that** the connecting part (9, 22) comprises spigots (40) salient towards the inside of the part.

12. Device according to anyone of the claims 2 to 11, **characterized in that** the implantable element is a dental implant (13, 25).

13. Device according to any one of the claims 2 to 11, **characterized in that** the implantable element is an intermediate pillar (30).

14. Device according to one of the claims 12 and 13, **characterized in that** the tool is a placing tool (15,28) for placing the implantable element.

15. Device according to any one of the claims 2 to 11, **characterized in that** the tool is a die.

16. Device according to one of the claims 12, 13 and 15, **characterized in that** the tool is a transfer part used for an imprint.

## Patentansprüche

1. Verfahren zur reversiblen Befestigung eines Werkzeugs an einem Ende eines implantierbaren Elements für eine Zahnprothese mittels eines hohlen Zwischen-Verbindungsstücks (9, 22), welches Verbindungsstück reversibel um einen zusätzlichen äußeren Bereich des Werkzeugs herum befestigt ist und wobei das Ende des implantierbaren Elements mit einem Antirotationssystem versehen ist,
**dadurch gekennzeichnet, dass**
- der genannte Bereich des Werkzeugs ein Ende umfasst, das eine zur Form des Anti-Drehungssystems komplementäre Form hat,
- und die reversible Befestigung des Zwischenstücks um den zusätzlichen äußeren Bereich des Werkzeugs gefolgt wird von einem Schritt der Positionierung des Endes des Werkzeugs an oder in dem Antirotationssystem bis zum Einrasten des Zwischen-Verbindungsstücks (9, 22) an einem komplementären äußeren Bereich des implantierbaren Elements (13, 25, 30, 38) mittels einer Außenrippe oder-rille am oberen Ende des implantierbaren Elements und mit einer komplementären Form zum Zwischen-Verbindungsstück, wodurch jegliche Längsbewegung des Werkzeugs im Verbindungsstück verhindert und erreicht wird, dass das Ende des entfernten Bereichs des Werkzeugs mit dem Antirotationssystem in Kontakt kommt, mit dem es zusammenwirkt.

2. Befestigungsvorrichtung, die umfasst:
- ein implantierbares Element für eine Zahnprothese, das ein Ende hat, das mit einem Antirotationssystem versehen ist,
- ein Werkzeug (15)
- und ein hohles Zwischen-Verbindungsstück (9, 22), das Befestigungsmittel zur reversiblen Befestigung des Verbindungsstücks um einen komplementären äußeren Bereich des Werkzeugs herum umfasst,
**dadurch gekennzeichnet, dass**
- das Zwischen-Verbindungsstück Mittel zum Einrasten umfasst, die dazu vorgesehen sind, durch Komplementarität an oder in dem Antirotationssystem einzurasten, mittels einer äußeren Rippe oder Rille am oberen Ende des implantierbaren Elements (13, 25, 30, 38),
- und der komplementäre äußere Bereich des Werkzeugs ein Ende des entfernten Bereichs (16) mit komplementärer Form zu derjenigen des Antirotationssystems hat, das dazu bestimmt ist, in Kontakt mit dem genannten Antirotationssystem des implantierbaren Elements gebracht zu werden, mit dem es beim Einrasten zusammenwirkt, wodurch jegliche Längsbewegung des Werkzeugs in dem Verbindungsstück verhindert und die reversible Befestigung unterschiedlicher Arten von Werkzeugen in unterschiedlichen Arten von implantierbaren Elementen ermöglicht wird.

3. Vorrichtung nach Anspruch 2, **dadurch gekennzeichnet, dass** die Befestigungsmittel mindestens eine Rille (12) umfassen, die in der Innenwand des Verbindungsstücks (9, 22) gebildet und vorgesehen ist, durch Einrasten mit einer umfänglichen, hervorstehenden Rippe (17) an dem Werkzeug (15, 18, 28, 36) zusammenzuwirken.

4. Vorrichtung nach Anspruch 3, **dadurch gekennzeichnet, dass** die Rille (12) begrenzt wird von mindestens einer Leiste (11), die an einem Ende des Verbindungsstücks (9) angeordnet ist, welche Leiste (11) dazu vorgesehen ist, durch Einrasten mit der äußeren Rille (14) zusammenzuwirken, die am Ende des implantierbaren Elements (13) ausgebildet ist.

5. Vorrichtung nach Anspruch 3, **dadurch gekennzeichnet, dass** die Einrastmittel eine zweite Rille (23) umfassen, die in der Innenwand des Verbindungsstücks (9, 22) gebildet und vorgesehen ist, mit der äußeren Rippe (27) zusammenzuwirken, die am Ende des implantierbaren Elements (25, 30, 38) ausgebildet ist.

6. Vorrichtung nach Anspruch 2, **dadurch gekennzeichnet, dass** die Befestigungsmittel Mittel zum Verschrauben umfassen.

7. Vorrichtung nach einem der Ansprüche 2 bis 6, **dadurch gekennzeichnet, dass** das Zwischen-Verbindungsstück (9) aus Kunststoff besteht.

8. Vorrichtung nach einem der Ansprüche 2 bis 6, **dadurch gekennzeichnet, dass** das Zwischen-Verbindungsstück (9, 22) aus Metall ist und Spalten (39) umfasst, die dazu bestimmt sind, es verformbar zu machen.

9. Vorrichtung nach einem der Ansprüche 2 bis 6, **dadurch gekennzeichnet, dass** das Zwischen-Verbindungsstück (9, 22) einen Teil aus Metall und einen Teil aus Kunststoff umfasst.

10. Vorrichtung nach einem der Ansprüche 2 bis 9, **dadurch gekennzeichnet, dass** das Verbindungsstück eine Öffnung umfasst, die durch seine Oberfläche parallel zur Achse (A1) geführt ist.

11. Vorrichtung nach einem der Ansprüche 2 bis 10, **dadurch gekennzeichnet, dass** das Verbindungsstück (9, 22) Nocken (40) umfasst, die zum Inneren des Stücks hervorstehen.

12. Vorrichtung nach einem der Ansprüche 2 bis 11, **dadurch gekennzeichnet, dass** das implantierbare Element ein Zahnimplantat ist.

13. Vorrichtung nach einem der Ansprüche 2 bis 11, **dadurch gekennzeichnet, dass** das implantierbare Element eine Zwischenstütze ist.

14. Vorrichtung nach einem der Ansprüche 12 und 13, **dadurch gekennzeichnet, dass** das Werkzeug ein Werkzeug (15, 28) zum Einsetzen des implantierbaren Elements ist.

15. Vorrichtung nach einem der Ansprüche 2 bis 11, **dadurch gekennzeichnet, dass** das implantierbare Element ein analoges Laborteil ist.

16. Vorrichtung nach einem der Ansprüche 12, 13 und 15, **dadurch gekennzeichnet, dass** das Werkzeug ein Transferstück ist, das zum Nehmen eines Abdrucks verwendet wird.
